# EUROPÄISCHE PATENTANMELDUNG

(11) **EP 4 552 906 A2**
(43) Veröffentlichungstag der Anmeldung: **14.05.2025**
(21) Anmeldenummer: 24211624.2
(22) Anmeldetag: 08.11.2024
(51) Int. Cl.: B60L 53/10, B60L 53/62

(54) **SCHNELLLADESTATION FÜR ELEKTROFAHRZEUGE**

(30) Priorität: 08.11.2023 DE 102023130953
(71) Anmelder: Compleo Charging Solutions GmbH & Co. KG, 58513 Lüdenscheid (DE)
(72) Erfinder: SZWED, Martin, 44263 Dortmund (DE)
(74) Vertreter: Gottschald Patentanwälte Partnerschaft mbB

(57) **Zusammenfassung**

Die Erfindung betrifft eine Schnellladestation für Elektrofahrzeuge, wobei die Schnellladestation (1) mindestens zwei Anschlusspunkte (2) aufweist, wobei die Schnellladestation (1) mehrere Leistungsmodule (3) aufweist, wobei die Leistungsmodule (3) jeweils eine Stromrichteranordnung (4) aufweisen, wobei die Leistungsmodule (3) Ausgangsanschlüsse (8) aufweisen, an denen das Leistungsmodul (3) elektrische Leistung abgibt, die zusammenschaltbar sind, sodass zumindest ein Teil, insbesondere alle, Leistungsmodule (3) flexibel auf die Anschlusspunkte (2) verteilbar sind, wobei die Schnellladestation (1) eine zentrale Steuereinheit (11) aufweist, die die Schaltmatrix (10) und die Verteilung der Leistungsmodule (3) auf die Anschlusspunkte (2) steuert. Es wird vorgeschlagen, dass die zentrale Steuereinheit (11) eine Gruppe von Leistungsmodulen (3) einem Anschlusspunkt (2) zuweist und die Schaltmatrix (10) so ansteuert, dass die Leistungsmodule (3) elektrisch mit dem Anschlusspunkt (2) verbunden sind, dass die zentrale Steuereinheit (11) den Leistungsmodulen (3) der Gruppe Regelparameter zuweist, dass die Leistungsmodule (3) auf Basis der Regelparameter ihre Ausgangsleistung regeln, und, dass die Regelparameter der Leistungsmodule (3) der Gruppe unterschiedlich sind, sodass die Leistungsmodule (3) der Gruppe aufgrund der unterschiedlichen Regelparameter unterschiedliche Ausgangsleistungen an den Anschlusspunkt (2) abgeben.

## Beschreibung

Die vorliegende Erfindung betrifft eine Schnellladestation für Elektrofahrzeuge gemäß dem Oberbegriff von Anspruch 1 sowie ein Verfahren zum Betrieb einer Schnellladestation gemäß dem Oberbegriff von Anspruch 14.

Schnellladestationen, auch bekannt als high performance charger, sind Gleichstromladestationen für elektrische Fahrzeuge, insbesondere Automobile, aber auch Lastkraftfahrzeuge, Schiffe und dergleichen.

Es sind Schnellladestationen bekannt, beispielsweise der Hypercharger von Alpitronic, die mehrere Leistungsmodule aufweisen. Leistungsmodule weisen jeweils eine Stromrichteranordnung auf, die insbesondere eine Wechselspannung am Eingang in eine Gleichspannung am Ausgang umwandelt. Statt einer Stromrichteranordnung für die gesamte Schnellladestation werden also mehrere verwendet. Das ermöglicht zum Beispiel eine flexible Verteilung der Leistungsmodule auf Anschlusspunkte, kleinere und ggf. effizientere Leistungselektronik und dergleichen.

Bei Schnellladestationen mit Leistungsmodulen ist denkbar, die Leistungsmodule parallel oder in Reihe zu schalten, oder komplexere Misch-Verschaltungen zu wählen. Bei der Entscheidung für die Verschaltung handelt es sich um eine grundsätzliche Entscheidung, da die sich daraus ergebenden Herausforderungen für die Regelung der Leistungsmodule naturgemäß sehr unterschiedlich sind. Bei einer bekannten Schnellladestation weisen die Leistungsmodule Ausgangsanschlüsse auf, an denen das Leistungsmodul elektrische Leistung abgibt, wobei die Ausgangsanschlüsse der Leistungsmodule über eine Schaltmatrix in unterschiedlichen Kombinationen zusammenschaltbar sind, sodass zumindest ein Teil, insbesondere alle, Leistungsmodule flexibel auf die Anschlusspunkte verteilbar sind, wobei die Schnellladestation eine zentrale Steuereinheit aufweist, die die Schaltmatrix und die Verteilung der Leistungsmodule auf die Anschlusspunkte steuert. Die Schaltmatrix kann dabei eine Schaltmatrix sein, die eine Parallelschaltung, eine Reihenschaltung oder eine Misch-Verschaltung ermöglicht. Relevant ist nur, dass die Leistungsmodule zumindest teilweise unterschiedlichen Anschlusspunkten zugeordnet werden können, um nach Bedarf Leistung dem einen oder dem anderen Anschlusspunkt zur Verfügung zu stellen.

Es ist dabei eine Herausforderung, die Verteilung von Leistung auf Anschlusspunkte zu verbessern.

Der Erfindung liegt das Problem zugrunde, die bekannte Schnellladestation derart auszugestalten und weiterzubilden, dass hinsichtlich der genannten Herausforderung eine weitere Optimierung erreicht wird.

Das obige Problem wird durch die Merkmale des kennzeichnenden Teils von Anspruch 1 gelöst.

Wesentlich ist die grundsätzliche Überlegung, dass Leistungsmodule zusammengeschaltet werden können, die von der zentralen Steuereinheit so gesteuert werden, dass sie unterschiedliche Mengen an Leistung abgeben. Diese Erkenntnis ermöglicht es, die Leistung pro Modul an diverse Faktoren anzupassen. Die Modulleistung eines Moduls kann so gewählt werden, dass dieses Modul eine höhere Regelreserve aufweist und für die Ausregelung von Lastspitzen, beispielsweise durch das Aktivieren einer Heizung des Elektrofahrzeugs, zuständig ist. Die Modulleistung kann auch an lokale Effizienzmaxima und unterschiedliche Änderungen der Effizienz in unterschiedlichen Leistungsbereichen angepasst werden. Auch eine Alterungsmetrik von Leistungsmodulen kann berücksichtigt werden. Leistungsmodule werden durch die wechselnden Belegungen zu Anschlusspunkten und die variierenden Leistungsanforderungen der Elektrofahrzeuge nicht gleichmäßig verschlissen. Dem kann entgegengewirkt werden, indem die Leistungsmodule bei Möglichkeit so verwendet werden, dass Leistungsmodule mit weniger Betriebsstunden (ggf. als Vollastbetriebsstunden skaliert) mehr belastet werden.

Im Einzelnen wird vorgeschlagen, dass die zentrale Steuereinheit eine Gruppe von Leistungsmodulen einem Anschlusspunkt zuweist und die Schaltmatrix so ansteuert, dass die Leistungsmodule elektrisch mit dem Anschlusspunkt verbunden sind, dass die zentrale Steuereinheit den Leistungsmodulen der Gruppe Regelparameter zuweist, dass die Leistungsmodule auf Basis der Regelparameter ihre Ausgangsleistung regeln, und, dass die Regelparameter der Leistungsmodule der Gruppe unterschiedlich sind, sodass die Leistungsmodule der Gruppe aufgrund der unterschiedlichen Regelparameter unterschiedliche Ausgangsleistungen an den Anschlusspunkt abgeben.

Bei einer besonders bevorzugten Ausgestaltung gemäß Anspruch 2 wählt die zentrale Steuereinheit die Regelparameter in einer Optimierungsroutine hinsichtlich eines Optimierungskriteriums, beispielsweise der Effizienz, optimiert aus. Die unterschiedlichen Regelparameter sind also nicht nach Belieben gewählt, sondern es wird ein bestimmtes Ziel verfolgt.

Gemäß Anspruch 3 kann vorgesehen sein, dass die Regelparameter so gewählt werden, dass eine Alterungsmetrik der Leistungsmodule berücksichtigt wird, insbesondere, um die Leistungsmodule gleichmäßig altern zu lassen. Interessant ist auch die Möglichkeit, die Alterungsmetrik vom Leistungsmodul selbst erfassen und speichern zu lassen. Wird ein Leistungsmodul durch ein neues Leistungsmodul ausgetauscht oder ein gebrauchtes Leistungsmodul eingebaut, steht immer die korrekte Alterungsmetrik zur Verfügung, ohne, dass diese separat übertragen oder angepasst werden muss. Ein Leistungsmodul, das eine Alterungsmetrik abspeichert, hat auch unabhängig von der Wahl unterschiedlicher Regelparameter eigenständige Relevanz, entweder als Leistungsmodul oder als Teil einer Schnellladestation mit mindestens einem Leistungsmodul. Ein solches Leistungsmodul kann mit allen hierin beschriebenen Ausgestaltungen in beliebiger Kombination zusammenwirken.

Ein ebenfalls bevorzugtes Optimierungskriterium ist die Gesamteffizienz der Leistungsmodule (Anspruch 4). Denkbar ist beispielsweise, dass eine Kombination eines Leistungsmoduls mit 70 % Leistung und eines Leistungsmoduls mit 50 % Leistung effizienter ist, als die Kombination zweier Leistungsmodule mit 60 % Leistung.

Anspruch 5 betrifft eine bevorzugte Ausgestaltung der Schaltmatrix, bei der die vorliegende Erfindung besonders vorteilhaft ist. Die Schaltmatrix hat einen vorteilhaften, einfachen Aufbau, der es jedoch nicht erlaubt, jede beliebige Kombination aus Leistungsmodulen mit einem Anschlusspunkt zu verschalten, sondern nur, einem dem Anschlusspunkt zugeordneten Strang zu verlängern oder zu verkürzen, entlang einer durch den Einbau fest vorgegebenen Reihenfolge. So können Ungleichgewichte in der Belastung der Leistungsmodule schnell entstehen und durch die vorschlagsgemäße Lehre verhindert oder nachträglich reduziert werden.

Bei einer Ausgestaltung gemäß Anspruch 6 ist vorgesehen, dass ein Leistungsmodul, das elektrisch mit dem Anschlusspunkt verbunden ist, keine Leistung an den Anschlusspunkt abgibt. Eine solche Anordnung ist wenig intuitiv, erlaubt es jedoch, das Leistungsmodul für Sicherheitsfunktionen und als Regelreserve zu nutzen (Anspruch 7) und Leistungsmodule im Strang hinter dem Leistungsmodul, das keine Leistung stellt, zu verwenden, um beispielsweise deren Betriebsstunden zu erhöhen.

Eine weitere bevorzugte Ausgestaltung gemäß Anspruch 8 betrifft die Möglichkeit, ein Leistungsmodul als Spannungsquelle und die anderen Leistungsmodule als Stromquelle zu betreiben. Das als Spannungsquelle arbeitende Leistungsmodul kann so kurzfristige Laständerungen ausregeln, während die übrigen Leistungsmodule einen konstanten Strom stellen. In diesem Fall gelten alle Ausführungen zu unterschiedlichen Regelparametern vorzugsweise für die als Stromquellen arbeitenden Leistungsmodule, sodass die als Stromquellen arbeitenden Leistungsmodule unterschiedliche Leistungen stellen.

Eine weitere bevorzugte Ausgestaltung, die auch eigenständige Relevanz unabhängig von der Wahl unterschiedlicher Regelparameter aufweist und mit den weiteren hierin beschriebenen Ausgestaltungen in beliebiger Kombination zusammenwirken kann, ist Gegenstand von Anspruch 9. Diese betrifft die Schaltung der Schaltmatrix, die vorzugsweise Schütze mit Halte-PWMs aufweist. Die Halte-PWMs können dabei phasenverschoben ausgestaltet werden, um ein Netzteil für die PWMs gleichmäßiger zu belasten und die elektromagnetischen Störungen zu verringern.

Ebenfalls interessant ist die Möglichkeit gemäß Anspruch 10, die Schütze zeitversetzt einzuschalten, um die Einschaltströme nicht gleichzeitig am Netzteil anliegen zu haben und so das Netzteil kleiner dimensionieren zu können. Solange die Schütze rechtzeitig vor Start des Ladevorgangs geschaltet werden, ist keine Verzögerung durch den Kunden zu bemerken.

Bei einer Ausgestaltung gemäß Anspruch 11 ist vorgesehen, dass eine redundante Sicherung der Schütze in Hardware so umgesetzt ist, dass die Anschlusspunkte nicht kurzgeschlossen werden können. In Hardware meint dabei, dass keine programmierbare Logik wie FPGA oder ein Mikrocontroller zum Einsatz kommt. Ein Kurzschluss ist vorzugsweise auch steuerungstechnisch in der zentralen Steuereinheit ausgeschlossen. Die Hardwaresicherung ist somit nur eine zusätzliche Sicherung.

Ebenfalls denkbar ist, dass die Leistungsmodule unterschiedliche Nennleistungen aufweisen. Besonders in diesem Fall haben unterschiedliche Leistungsvorgaben für die Leistungsmodule beispielsweise für die Gesamteffizienz einen starken Einfluss (Anspruch 12).

Eine weitere bevorzugte Ausgestaltung, die auch eigenständige Relevanz unabhängig von der Wahl unterschiedlicher Regelparameter aufweist und mit den weiteren hierin beschriebenen Ausgestaltungen in beliebiger Kombination zusammenwirken kann, ist Gegenstand von Anspruch 13. Demnach kann die Schaltmatrix so angesteuert werden, dass ein nicht belegter Anschlusspunkt elektrisch und vor allem thermisch mit einem oder mehreren Leistungsmodulen verbunden ist. Die Ableitung von während des Ladevorgangs entstandener Wärme wird so verbessert.

Nach einer weiteren Lehre gemäß Anspruch 14, der eigenständige Bedeutung zukommt, wird ein Verfahren zum Betrieb einer Schnellladestation beansprucht.

Dabei ist wesentlich, dass die zentrale Steuereinheit eine Gruppe von Leistungsmodulen einem Anschlusspunkt zuweist und die Schaltmatrix so ansteuert, dass die Leistungsmodule elektrisch mit dem Anschlusspunkt verbunden sind, dass die zentrale Steuereinheit den Leistungsmodulen der Gruppe Regelparameter zuweist, dass die Leistungsmodule auf Basis der Regelparameter ihre Ausgangsleistung regeln, und, dass die Regelparameter der Leistungsmodule der Gruppe unterschiedlich sind, sodass die Leistungsmodule der Gruppe aufgrund der unterschiedlichen Regelparameter unterschiedliche Ausgangsleistungen an den Anschlusspunkt abgeben.

Auf alle Ausführungen zu der vorschlagsgemäßen Schnellladestation darf verwiesen werden.

Im Folgenden wird die Erfindung anhand einer lediglich Ausführungsbeispiele darstellenden Zeichnung näher erläutert. In der Zeichnung zeigt
- Fig. 1: eine vorschlagsgemäße Schnellladestation,
- Fig. 2: einen Blick in die Schnellladestation und auf die Leistungsmodule und
- Fig. 3: Gleichspannungsschienen mit einer Schaltmatrix und Anschlusspunkten sowie damit verbundene Leistungsmodule mit Stromrichteranordnung und Filterstufen.

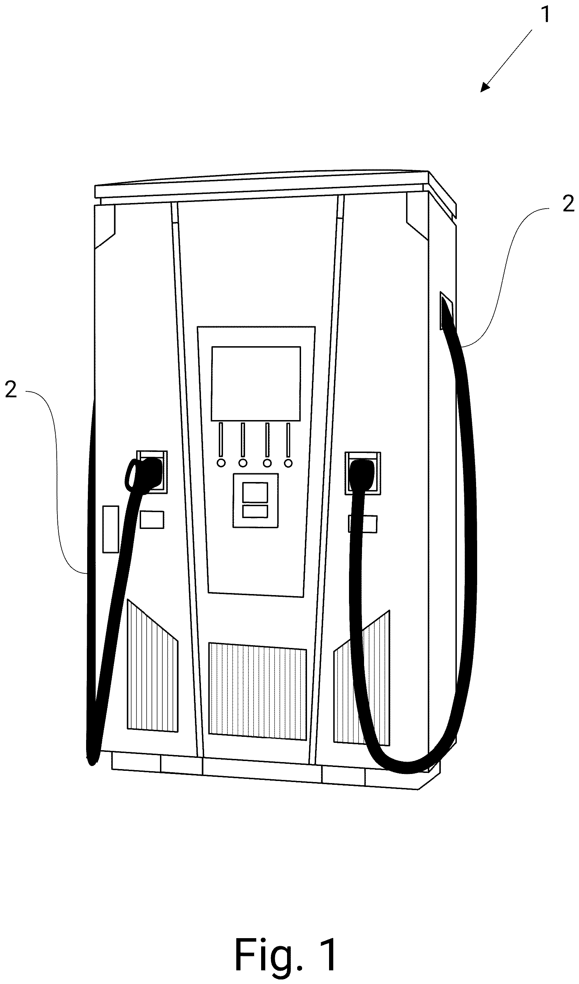

Fig. 1 zeigt eine Außenansicht einer vorschlagsgemäßen Schnellladestation 1 für Elektrofahrzeuge. Diese weist mindestens einen Anschlusspunkt 2 für ein Elektrofahrzeug, hier ein fest angeschlagenes Ladekabel, auf. Vorzugsweise weist die Schnellladestation 1 mindestens, hier genau, zwei Anschlusspunkte 2 auf. Eine Schnellladestation 1 dient zum Laden eines Elektrofahrzeugs mittels Gleichstroms und einer Leistung von zumeist mindestens 50 kW. Üblicherweise ist die Schnellladestation 1 dafür an ein Wechselstromnetz angeschlossen.

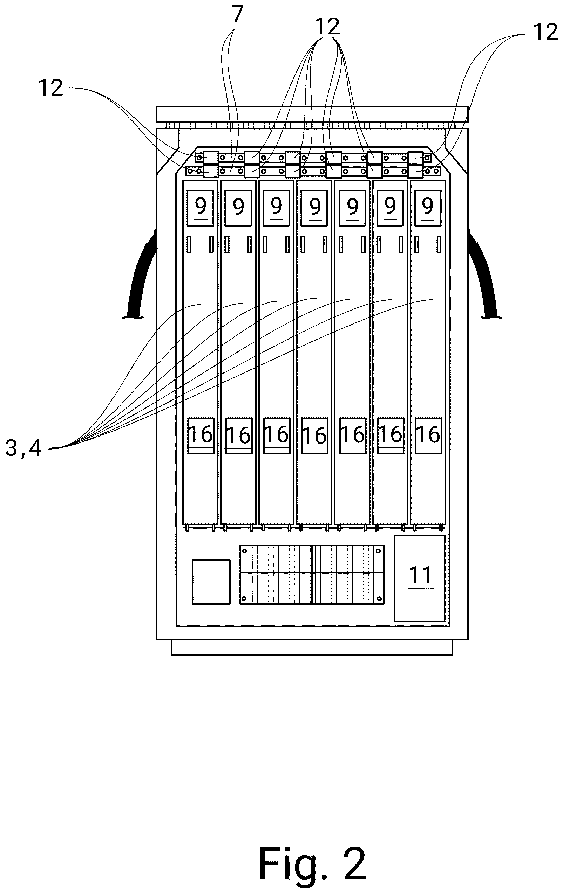

Wie in der geöffneten Ansicht in Fig. 2 erkennbar ist, weist die Schnellladestation 1 mindestens ein einzeln handhabbares Leistungsmodul 3 auf. Hier weist die Schnellladestation 1 sieben Leistungsmodule 3 auf, die jeweils einen Teil der Gesamtleistung der Schnellladestation 1 zur Verfügung stellen, hier beispielsweise jeweils 30 kW. Die Leistungsmodule 3 können hier und vorzugsweise flexibel auf die Anschlusspunkte 2 aufgeteilt werden.

Der Begriff "einzeln handhabbar" ist hier breit zu verstehen. Das Leistungsmodul 3 wiegt hier beispielsweise etwa 39 kg, ist also nicht leicht handhabbar. Es ist jedoch einzeln herausnehmbar und die Komponenten des Leistungsmoduls 3 sind gerade nicht einzeln in der Schnellladestation 1 verbaut.

Das in den Figuren dargestellte und insoweit bevorzugte Ausführungsbeispiel betrifft eine Schnellladestation 1 für Elektrofahrzeuge, wobei die Schnellladestation 1 mindestens zwei Anschlusspunkte 2 aufweist, wobei die Schnellladestation 1 mehrere Leistungsmodule 3 aufweist, wobei die Leistungsmodule 3 jeweils eine Stromrichteranordnung 4 aufweisen. Die Stromrichteranordnung 4 dient hier und vorzugsweise zur Wandlung einer dreiphasigen Netzspannung als Eingangsspannung der Schnellladestation 1 in eine Gleichspannung. Hier und vorzugsweise weist die Leistungselektronik einen Gleichrichter 5 und einen nachgeschalteten Gleichspannungswandler 6 auf, die nicht im Detail dargestellt sind. Erkennbar sind im oberen Bereich der Schnellladestation 1 Gleichspannungsschienen 7 zur Verteilung der Ausgangsleistung der Leistungsmodule 3 auf die Anschlusspunkte 2. Der Wechselspannungseingang ist hier im unteren Bereich angeordnet und nicht dargestellt.

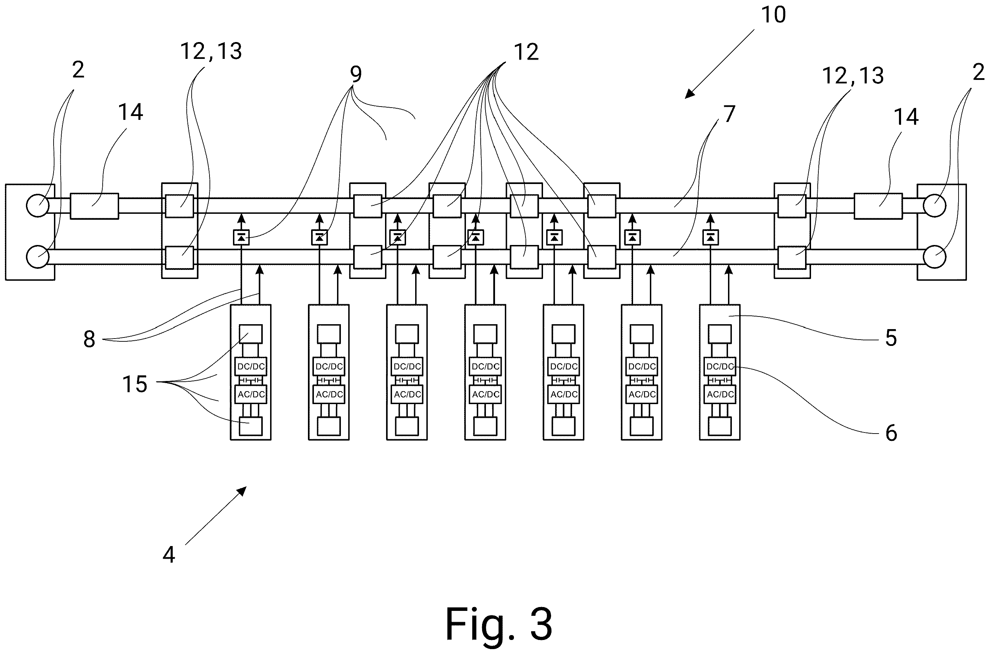

Die Leistungsmodule 3 weisen Ausgangsanschlüsse 8 auf, an denen das Leistungsmodul 3 elektrische Leistung abgibt. Hier und vorzugsweise sind die Ausgangsanschlüsse 8 an die Gleichspannungsschienen 7 angeschlossen. Wie in Fig. 3 erkennbar, kann vorgesehen sein, dass der Anschluss unidirektional ist, insbesondere indem mindestens eine Diode 9 zwischen Leistungsmodul 3 und Gleichspannungsschienen 7 geschaltet ist. Ebenso bevorzugt ist auch ein bidirektionaler Anschluss möglich, dann ohne die dargestellte Diode 9.

Die Ausgangsanschlüsse 8 der Leistungsmodule 3 sind über eine Schaltmatrix 10 in unterschiedlichen Kombinationen zusammenschaltbar, sodass zumindest ein Teil der, insbesondere alle, Leistungsmodule 3 flexibel auf die Anschlusspunkte 2 verteilbar sind. Die Schnellladestation 1 weist eine zentrale Steuereinheit 11 auf, die die Schaltmatrix 10 und die Verteilung der Leistungsmodule 3 auf die Anschlusspunkte 2 steuert. Die zentrale Steuereinheit 11 kann aus einer oder mehreren Recheneinheiten bestehen und verteilt ausgestaltet sein. Die Steuerung der Schaltmatrix 10 kann durch direkte Ansteuerung oder indirekt erfolgen.

Vorgeschlagen wird nun, dass die zentrale Steuereinheit 11 eine Gruppe von Leistungsmodulen 3 einem Anschlusspunkt 2 zuweist und die Schaltmatrix 10 so ansteuert, dass die Leistungsmodule 3 elektrisch mit dem Anschlusspunkt 2 verbunden sind. Fig. 3 zeigt zwischen den Anschlüssen der Leistungsmodule 3 Schalter, hier Schütze 12, jeweils in Paaren. An diesen Stellen können die Gleichspannungsschienen 7 aufgetrennt oder verbunden werden. Sind alle Schütze 12 bis auf ein Paar geschlossen, sind die Leistungsmodule 3 also in zwei Stränge aufgeteilt, die den beiden Anschlusspunkten 2 zugeordnet sind.

Weiter zeigt Fig. 3 hier und vorzugsweise vorhandene Ausgangsschalter 13 pro Anschlusspunkt 2 und eine ebenfalls vorzugsweise vorhandene Ausgangssicherung 14 pro Anschlusspunkt 2. Die äußeren beiden Leistungsmodule 3 sind gemäß Fig. 3 und vorzugsweise nicht getrennt einem Anschlusspunkt 2 zuordenbar, sodass zwar einem Anschlusspunkt 2 alle Leistungsmodule 3 zugeordnet werden können, bei Verwendung beider Anschlusspunkte 2 aber mindestens zwei Leistungsmodule 3 einem Anschlusspunkt 2 zugeordnet sind. Fig. 2 zeigt eine alternative Anordnung, bei der auch zwischen den äußeren Leistungsmodulen 3 Schütze 12 angeordnet sind. Fig. 3 zeigt auch, dass in den Leistungsmodulen 3 hier und vorzugsweise Filterstufen 15 angeordnet sind. Diese sind vorliegend nicht weiter beachtlich.

Weiter wird vorgeschlagen, dass die zentrale Steuereinheit 11 den Leistungsmodulen 3 der Gruppe Regelparameter zuweist. Die Regelparameter umfassen hier und vorzugsweise einen Ausgangsstrom und/oder eine Ausgangsspannung und/oder eine Ausgangsleistung des jeweiligen Leistungsmoduls 3. Die Leistungsmodule 3 regeln auf Basis der Regelparameter ihre Ausgangsleistung, entweder direkt als Ausgangsleistung oder indirekt als Ausgangsstrom und/oder Ausgangsspannung oder anderweitig indirekt. Die Regelparameter der Leistungsmodule 3 der Gruppe sind unterschiedlich, sodass die Leistungsmodule 3 der Gruppe aufgrund der unterschiedlichen Regelparameter unterschiedliche Ausgangsleistungen an den Anschlusspunkt 2 abgeben. Es ist klar, dass die Leistung nicht immer und bei jedem Ladevorgang unterschiedlich sein muss, sondern, dass dieser Fall nur manchmal eintritt.

Die Unterschiede in der Ausgangsleistung betragen hier und vorzugsweise mindestens 10 % der höchsten Ausgangsleistung eines der Leistungsmodule 3, vorzugsweise mindestens 20 %, weiter vorzugsweise mindestens 30 %. Hier und vorzugsweise ist vorgesehen, dass zwei Leistungsmodule 3 mit unterschiedlicher Leistung jeweils eine Leistung größer null an einen Anschlusspunkt 2 abgeben. Auch diese Fälle treten selbstverständlich bevorzugt nur manchmal ein. Das versteht sich auch im Folgenden und wird dort nicht weiter thematisiert. Es kann vorgesehen sein, dass die Leistungsmodule 3 die gleiche Nennleistung aufweisen.

Es darf darauf hingewiesen werden, dass die Regelparameter ursächlich für die unterschiedlichen Ausgangsleistungen sind. Zufällige Schwankungen durch Toleranzen oder dergleichen sind also nicht umfasst.

Die zentrale Steuereinheit 11 führt hier und vorzugsweise eine Optimierungsroutine durch, in der die zentrale Steuereinheit 11 die Regelparameter hinsichtlich eines Optimierungskriteriums optimiert auswählt, insbesondere ermittelt. Vorzugsweise ermittelt die zentrale Steuereinheit 11 in der Optimierungsroutine die Regelparameter abhängig vom aktuellen Leistungsbedarf des Anschlusspunktes 2 optimiert. Bei unterschiedlichen Leistungsbedarfen am Anschlusspunkt 2 ändern sich demnach auch die Regelparameter. Das kann auch dazu führen, dass die prozentuale Verteilung der Ausgangsleistung auf die Leistungsmodule 3 während eines Ladevorgangs von der zentralen Steuereinheit 11 geändert wird.

Weiter ist hier und vorzugsweise vorgesehen, dass die zentrale Steuereinheit 11 eine Alterungsmetrik der Leistungsmodule 3 erfasst, und, dass die zentrale Steuereinheit 11 die Regelparameter in der Optimierungsroutine abhängig von der Alterungsmetrik der Leistungsmodule 3 ermittelt, insbesondere derart, dass Leistungsmodule 3 mit höherem Alter weniger beansprucht werden. Vorzugsweise ist es außerdem so, dass die Leistungsmodule 3 Modulsteuereinheiten 16 aufweisen, und, dass die Modulsteuereinheiten 16 der Leistungsmodule 3 ihre Alterungsmetrik erfassen und der zentralen Steuereinheit 11 mitteilen. Bei der Alterungsmetrik handelt es sich hier und vorzugsweise um Betriebsstunden, die von den Leistungsmodulen 3 gezählt werden können. Die Betriebsstunden können mit einer Ausgangsleistung skaliert werden, um beispielsweise Volllastbetriebsstunden zu ermitteln. Wird ein neues Leistungsmodul 3 in die Schnellladestation 1 eingebaut, bringt es eine Modulsteuereinheit 16 mit, die die Alterungsmetrik bereits aufweist. Ist das Leistungsmodul 3 fabrikneu, wird die Alterungsmetrik somit automatisch auf null stehen, ohne, dass eine Konfiguration der zentralen Steuereinheit 11 notwendig ist. Wird ein gebrauchtes Leistungsmodul 3 in eine andere Schnellladestation 1 eingebaut, nimmt es seine Alterungsmetrik mit.

Weiter kann vorgesehen sein, dass die zentrale Steuereinheit 11 in der Optimierungsroutine die Regelparameter mehrerer Leistungsmodule 3 hinsichtlich einer Gesamteffizienz der Leistungsmodule 3 optimiert ermittelt. Erwähnenswert ist auch, dass beim Optimieren der Vorgang des Optimierens gemeint ist, ob das Ergebnis theoretisch perfekt optimal ist, lässt sich nicht bewerten. Bei Betrachtung der Effizienz in Abhängigkeit der Leistung bei üblichen Stromrichteranordnungen 4 wird klar, dass die Gesamteffizienz höher sein kann, wenn die Leistungsmodule 3 unterschiedliche Ausgangsleistungen aufweisen. Die Effizienzkurven in Abhängigkeit von der Leistung oder dem Strom können im Leistungsmodul 3 und/oder der zentralen Steuereinheit 11 hinterlegt sein, sodass sich ein einfaches Optimierungsproblem ergibt.

Mit Blick auf Fig. 3 wird klar, dass die Leistungsmodule 3 hier und vorzugsweise über die Schaltmatrix 10 in Stränge aufteilbar sind, wobei vorzugsweise pro Anschlusspunkt 2 ein Strang nur verlängert oder verkürzt werden kann, da die Leistungsmodule 3 entlang des Strangs eine feste Reihenfolge aufweisen.

In einer Ausgestaltung ist vorgesehen, dass die zentrale Steuereinheit 11 die Regelparameter so wählt, dass mindestens eines der Leistungsmodule 3 der Gruppe keine Leistung liefert, vorzugsweise, dass das Leistungsmodul 3, das keine Leistung liefert in dem, dem Anschlusspunkt 2 zugeordneten, Strang vom Anschlusspunkt 2 aus gesehen vor einem Leistungsmodul 3 angeordnet ist, das Leistung liefert, oder, dass das Leistungsmodul 3, das keine Leistung liefert in dem, dem Anschlusspunkt 2 zugeordneten, Strang vom Anschlusspunkt 2 aus gesehen nicht vor einem Leistungsmodul 3 angeordnet ist, das Leistung liefert. Im ersten Fall könnte beispielsweise das äußerste Leistungsmodul 3 keine Leistung liefern. Das äußerste Leistungsmodul 3 würde, würden alle mit einem Anschlusspunkt 2 verbundenen Leistungsmodule 3 immer die gleiche Leistung liefern, über die Zeit wahrscheinlich die meisten Betriebsstunden ansammeln, während mittiger gelegene Leistungsmodule 3 häufiger nicht verwendet würden. Dem kann so entgegengewirkt werden. Ein Leistungsmodul 3, das keine Leistung stellt, erhält Regelparameter, beispielsweise im Sinne eines Abschaltbefehls, die dafür sorgen, dass das Leistungsmodul 3 keine Leistung stellt. Ist eine Diode 9 wie in Fig. 3 vorhanden, sind gegebenenfalls keine weiteren Maßnahmen notwendig. Bei einem bidirektionalen Leistungsmodul 3 muss natürlich sichergestellt werden, dass das Leistungsmodul 3 auch dann elektrisch sicher ist.

Der zweite Fall kann beispielsweise relevant sein, wenn, wie vorzugsweise, das Leistungsmodul 3, das keine Leistung liefert, als Regelreserve dient und Lastspitzen durch das Stellen von Leistung ausregelt, und/oder, das Leistungsmodul 3, das keine Leistung liefert, bei einer Notabschaltung in mindestens einem anderen Leistungsmodul 3 gespeicherte Energie abbaut. Es kann vorgesehen sein, dass die Leistungsmodule 3 Kurzschlussschaltungen aufweisen, über die in Energiespeichern der Leistungsmodule 3 gespeicherte Energie bei einer Notabschaltung abgebaut wird. Diese Kurzschlussschaltungen können zum Beispiel ein normally closed Schaltelement aufweisen, das bei schlagartigem Ausfall des Leistungsmoduls 3, der Modulsteuereinheit 16 oder dergleichen, automatisch geschlossen wird und den Energiespeicher kurzschließt. Wird ein Leistungsmodul 3, das selbst keine Leistung stellt, präventiv mit anderen, Leistung stellenden Leistungsmodulen 3 verbunden, kann das keine Leistung stellende Leistungsmodul 3 verwendet werden, um Energie aus anderen Leistungsmodulen 3 abzubauen. Ohne diese Verbindung wäre hier ein geöffnetes Schütz 12 zwischen den Leistungsmodulen 3 angeordnet und ein solcher Energieabbau bei einer Notabschaltung nicht mehr ohne weiteres möglich.

Weiter ist hier und vorzugsweise vorgesehen, dass ein Leistungsmodul 3 der Gruppe als Spannungsquelle arbeitet und die anderen Leistungsmodule 3 der Gruppe als Stromquelle. Bevorzugt ist es dabei so, dass die Gruppe ein Primärmodul und mindestens ein Sekundärmodul aufweist. Bevorzugt weist die Gruppe immer genau ein Primärmodul auf. Manchmal ist kein Sekundärmodul nötig, für die betrachteten Fälle ist jedoch mindestens eines vorhanden.

Die Modulsteuereinheit 16 regelt hier und vorzugsweise die Stromrichteranordnung 4 des jeweiligen Leistungsmoduls 3. Vorzugsweise ist es dabei so, dass die Modulsteuereinheit 16 des Primärmoduls eine Gesamtregelung für den Anschlusspunkt 2 übernimmt, und, dass die Modulsteuereinheit 16 oder die Modulsteuereinheiten 16 des Sekundärmoduls oder der Sekundärmodule mindestens einen ihrer Ausgangsparameter regeln. Die Regelung des Ausgangsparameters des Sekundärmoduls oder der Sekundärmodule erfolgt dabei hier und vorzugsweise so, dass dieser Ausgangsparameter kein Ausgangsparameter des Anschlusspunktes 2 ist.

Besonders bevorzugt verhält es sich so, dass das Primärmodul die Gesamtspannung des Anschlusspunkts 2 regelt, insbesondere indem es seine Ausgangsspannung regelt, und so als Spannungsquelle funktioniert, und/oder, dass das Sekundärmodul seinen Ausgangsstrom regelt und so als Stromquelle funktioniert, oder, dass die Sekundärmodule ihren Ausgangsstrom regeln und so als Stromquellen funktionieren. Das Primärmodul regelt also seine Spannung, die bei einer Parallelschaltung im Wesentlichen der Spannung des Anschlusspunktes 2 entspricht. Die Sekundärmodule regeln den Strom, der sich mit dem Strom der anderen Sekundärmodule und des Primärmoduls addiert und somit kein Ausgangsparameter des Anschlusspunktes 2 ist.

Hier und vorzugsweise ist es nun so, dass die zentrale Steuereinheit 11 die Regelparameter der gleichartig geregelten, insbesondere als Stromquelle arbeitenden, Leistungsmodule 3 unterschiedlich wählt, und/oder, dass die Leistungsmodule 3 der Gruppe parallel geschaltet sind. Der Begriff "gleichartig geregelt" meint, dass die Leistungsmodule 3 den gleichen Ausgangsparameter oder die gleichen Ausgangsparameter regeln. Alle Ausführungen zu unterschiedlichen Regelparametern gelten vorzugsweise für die als Stromquellen arbeitenden Leistungsmodule 3 unabhängig von dem als Spannungsquelle arbeitenden Leistungsmodul 3. Demnach ist hier und vorzugsweise vorgesehen, dass die Regelparameter der Leistungsmodule 3 der Gruppe, die als Stromquelle arbeiten, unterschiedlich sind, sodass die Leistungsmodule 3 der Gruppe, die als Stromquelle arbeiten, aufgrund der unterschiedlichen Regelparameter unterschiedliche Ausgangsleistungen an den Anschlusspunkt 2 abgeben.

Mit Blick auf die Schaltmatrix 10 selbst ist hier und vorzugsweise vorgesehen, dass die Schaltmatrix 10 Schütze 12 mit Steuerspulen als Schalter aufweist, dass die zentrale Steuereinheit 11 Halte-PWMs zum Halten der Schütze 12 in der geschlossenen Position erzeugt, und, vorzugsweise, dass die Halte-PWMs zumindest teilweise phasenverschoben erzeugt werden. Wenn das Netzteil nicht den Strom aller Halte-PWMs gleichzeitig, während der Pulse, stellen muss, nur um dann zwischen den Pulsen keinen Strom zu stellen, kann das Netzteil kleiner dimensioniert werden. Auch bezüglich der elektromagnetischen Störungen ist diese Ausgestaltung von Vorteil. Es kann dabei so sein, dass höchstens zwei Schütze 12, insbesondere die jeweils parallelen Schütze 12, oder höchstens ein Schütz 12 mit der gleichen PWM-Phase angesteuert wird oder werden.

Weiter ist hier und vorzugsweise vorgesehen, dass die zentrale Steuereinheit 11 vor Beginn eines Ladevorgangs die Gruppe Leistungsmodule 3 mit dem Anschlusspunkt 2 verbindet, und, dass die zentrale Steuereinheit 11 die Schütze 12 zeitversetzt ansteuert, insbesondere so, dass ein Leistungsmodul 3 nach dem anderen zugeschaltet wird. Auch das sorgt dafür, dass das Netzteil kleiner dimensioniert werden kann. Hier und vorzugsweise sind die Schaltvorgänge bei Beginn des Ladevorgangs abgeschlossen. Insbesondere werden jeweils zwei parallele Schütze 12 gleichzeitig geschaltet.

Zusätzlich oder alternativ kann vorgesehen sein, dass die Schnellladestation 1 eine Sicherungslogik in nicht programmierbarer Hardwarelogik aufweist, die mit den Schützen 12 verbunden ist und bei einem Schließen aller Schütze 12 zwischen zwei Anschlüssen zweier Anschlusspunkte 2 eine Notabschaltung, insbesondere der Halte-PWMs der Schütze 12, auslöst.

Ebenfalls denkbar ist, dass die Leistungsmodule 3 unterschiedliche Nennleistungen aufweisen, dass der Unterschied mindestens 5 %, vorzugsweise mindestens 25 %, weiter vorzugsweise mindestens 50 % der geringsten Nennleistung beträgt. Hier sind beispielsweise die äußeren beiden Leistungsmodule 3 sowieso immer zusammen geschaltet. Stattdessen könnte auch ein größeres Leistungsmodul 3 vorgesehen sein.

Weiter ist hier und vorzugsweise vorgesehen, dass die zentrale Steuereinheit 11 nach einem Ladevorgang die Schaltmatrix 10 so ansteuert, dass Leistungsmodule 3, die keine Leistung liefern, mit dem Anschlusspunkt 2 verbunden sind, während der Anschlusspunkt 2 von keinem Elektrofahrzeug belegt ist. Diese elektrisch meist weniger relevante Schaltung verbindet einen größeren Teil der Gleichspannungsschienen 7 thermisch mit dem Ladekabel, wodurch dessen Temperatur schneller reduziert werden kann.

Vorgeschlagen wird gemäß einer weiteren Lehre ein Verfahren zum Betrieb einer Schnellladestation 1 nach einem der vorhergehenden Ansprüche, wobei die Schnellladestation 1 mindestens zwei Anschlusspunkte 2 aufweist, wobei die Schnellladestation 1 mehrere Leistungsmodule 3 aufweist, wobei die Leistungsmodule 3 jeweils eine Stromrichteranordnung 4 insbesondere zur Wandlung einer Wechselspannung als Eingangsspannung der Schnellladestation 1 in eine Gleichspannung als Ausgangsspannung der Schnellladestation 1 aufweisen, wobei die Leistungsmodule 3 Ausgangsanschlüsse 8 aufweisen, an denen das Leistungsmodul 3 elektrische Leistung abgibt, wobei die Ausgangsanschlüsse 8 der Leistungsmodule 3 über eine Schaltmatrix 10 in unterschiedlichen Kombinationen zusammenschaltbar sind, sodass zumindest ein Teil, insbesondere alle, Leistungsmodule 3 flexibel auf die Anschlusspunkte 2 verteilbar sind, wobei die Schnellladestation 1 eine zentrale Steuereinheit 11 aufweist, die die Schaltmatrix 10 und die Verteilung der Leistungsmodule 3 auf die Anschlusspunkte 2 steuert.

Wesentlich nach dieser weiteren Lehre ist, dass die zentrale Steuereinheit 11 eine Gruppe von Leistungsmodulen 3 einem Anschlusspunkt 2 zuweist und die Schaltmatrix 10 so ansteuert, dass die Leistungsmodule 3 elektrisch mit dem Anschlusspunkt 2 verbunden sind, dass die zentrale Steuereinheit 11 den Leistungsmodulen 3 der Gruppe Regelparameter zuweist, dass die Leistungsmodule 3 auf Basis der Regelparameter ihre Ausgangsleistung regeln, und, dass die Regelparameter der Leistungsmodule 3 der Gruppe unterschiedlich sind, sodass die Leistungsmodule 3 der Gruppe aufgrund der unterschiedlichen Regelparameter unterschiedliche Ausgangsleistungen an den Anschlusspunkt 2 abgeben.

Auf alle Ausführungen zu der vorschlagsgemäßen Schnellladestation 1 darf verwiesen werden.

### Bezugszeichenliste

- 1: Schnellladestation
- 2: Anschlusspunkt
- 3: Leistungsmodul
- 4: Stromrichteranordnung
- 5: Gleichrichter
- 6: Gleichspannungswandler
- 7: Gleichspannungsschiene
- 8: Ausgangsanschluss
- 9: Diode
- 10: Schaltmatrix
- 11: zentrale Steuereinheit
- 12: Schütz
- 13: Ausgangsschalter
- 14: Ausgangssicherung
- 15: Filterstufe
- 16: Modulsteuereinheit

## Patentansprüche

1. Schnellladestation für Elektrofahrzeuge, wobei die Schnellladestation (1) mindestens zwei Anschlusspunkte (2) aufweist, wobei die Schnellladestation (1) mehrere Leistungsmodule (3) aufweist, wobei die Leistungsmodule (3) jeweils eine Stromrichteranordnung (4) insbesondere zur Wandlung einer Wechselspannung als Eingangsspannung der Schnellladestation (1) in eine Gleichspannung als Ausgangsspannung der Schnellladestation (1) aufweisen, wobei die Leistungsmodule (3) Ausgangsanschlüsse (8) aufweisen, an denen das Leistungsmodul (3) elektrische Leistung abgibt, wobei die Ausgangsanschlüsse (8) der Leistungsmodule (3) über eine Schaltmatrix (10) in unterschiedlichen Kombinationen zusammenschaltbar sind, sodass zumindest ein Teil, insbesondere alle, Leistungsmodule (3) flexibel auf die Anschlusspunkte (2) verteilbar sind, wobei die Schnellladestation (1) eine zentrale Steuereinheit (11) aufweist, die die Schaltmatrix (10) und die Verteilung der Leistungsmodule (3) auf die Anschlusspunkte (2) steuert,
**dadurch gekennzeichnet,**
**dass** die zentrale Steuereinheit (11) eine Gruppe von Leistungsmodulen (3) einem Anschlusspunkt (2) zuweist und die Schaltmatrix (10) so ansteuert, dass die Leistungsmodule (3) elektrisch mit dem Anschlusspunkt (2) verbunden sind, dass die zentrale Steuereinheit (11) den Leistungsmodulen (3) der Gruppe Regelparameter zuweist, dass die Leistungsmodule (3) auf Basis der Regelparameter ihre Ausgangsleistung regeln, und, dass die Regelparameter der Leistungsmodule (3) der Gruppe unterschiedlich sind, sodass die Leistungsmodule (3) der Gruppe aufgrund der unterschiedlichen Regelparameter unterschiedliche Ausgangsleistungen an den Anschlusspunkt (2) abgeben.

2. Schnellladestation nach Anspruch 1, **dadurch gekennzeichnet, dass** die zentrale Steuereinheit (11) eine Optimierungsroutine durchführt, in der die zentrale Steuereinheit (11) die Regelparameter hinsichtlich eines Optimierungskriteriums optimiert auswählt, vorzugsweise, dass die zentrale Steuereinheit (11) in der Optimierungsroutine die Regelparameter abhängig vom aktuellen Leistungsbedarf des Anschlusspunktes (2) optimiert ermittelt.

3. Schnellladestation nach Anspruch 2, **dadurch gekennzeichnet, dass** die zentrale Steuereinheit (11) eine Alterungsmetrik der Leistungsmodule (3) erfasst, dass die zentrale Steuereinheit (11) die Regelparameter in der Optimierungsroutine abhängig von der Alterungsmetrik der Leistungsmodule (3) ermittelt, insbesondere derart, dass Leistungsmodule (3) mit höherem Alter weniger beansprucht werden, vorzugsweise, dass die Leistungsmodule (3) Modulsteuereinheiten (16) aufweisen, dass die Modulsteuereinheiten (16) der Leistungsmodule (3) ihre Alterungsmetrik erfassen und der zentralen Steuereinheit (11) mitteilen.

4. Schnellladestation nach Anspruch 2 oder 3, **dadurch gekennzeichnet, dass** die zentrale Steuereinheit (11) in der Optimierungsroutine die Regelparameter mehrerer Leistungsmodule (3) hinsichtlich einer Gesamteffizienz der Leistungsmodule (3) optimiert ermittelt.

5. Schnellladestation nach einem der vorhergehenden Ansprüche, **dadurch gekennzeichnet, dass** die Leistungsmodule (3) über die Schaltmatrix (10) in Stränge aufteilbar sind, vorzugsweise, dass pro Anschlusspunkt (2) ein Strang nur verlängert oder verkürzt werden kann, da die Leistungsmodule (3) entlang des Strangs eine feste Reihenfolge aufweisen.

6. Schnellladestation nach einem der vorhergehenden Ansprüche, **dadurch gekennzeichnet, dass** die zentrale Steuereinheit (11) die Regelparameter so wählt, dass mindestens eines der Leistungsmodule (3) der Gruppe keine Leistung liefert, vorzugsweise, dass das Leistungsmodul (3), das keine Leistung liefert in dem, dem Anschlusspunkt (2) zugeordneten, Strang vom Anschlusspunkt (2) aus gesehen vor einem Leistungsmodul (3) angeordnet ist, das Leistung liefert, oder, dass das Leistungsmodul (3), das keine Leistung liefert in dem, dem Anschlusspunkt (2) zugeordneten, Strang vom Anschlusspunkt (2) aus gesehen nicht vor einem Leistungsmodul (3) angeordnet ist, das Leistung liefert.

7. Schnellladestation nach Anspruch 6, **dadurch gekennzeichnet, dass** das Leistungsmodul (3), das keine Leistung liefert, als Regelreserve dient und Lastspitzen durch das Stellen von Leistung ausregelt, und/oder, dass das Leistungsmodul (3), das keine Leistung liefert, bei einer Notabschaltung in mindestens einem anderen Leistungsmodul (3) gespeicherte Energie abbaut.

8. Schnellladestation nach einem der vorhergehenden Ansprüche, **dadurch gekennzeichnet, dass** ein Leistungsmodul (3) der Gruppe als Spannungsquelle arbeitet und die anderen Leistungsmodule (3) der Gruppe als Stromquelle, dass die zentrale Steuereinheit (11) die Regelparameter der als Stromquelle arbeitenden Leistungsmodule (3) unterschiedlich wählt, vorzugsweise, dass die Leistungsmodule (3) der Gruppe parallel geschaltet sind.

9. Schnellladestation nach einem der vorhergehenden Ansprüche, **dadurch gekennzeichnet, dass** die Schaltmatrix (10) Schütze (12) mit Steuerspulen als Schalter aufweist, dass die zentrale Steuereinheit (11) Halte-PWMs zum Halten der Schütze (12) in der geschlossenen Position erzeugt, vorzugsweise, dass die Halte-PWMS zumindest teilweise phasenverschoben erzeugt werden, weiter vorzugsweise, dass höchstens zwei Schütze (12) oder höchstens ein Schütz (12) mit der gleichen PWM-Phase angesteuert wird oder werden.

10. Schnellladestation nach Anspruch 9, **dadurch gekennzeichnet, dass** die zentrale Steuereinheit (11) vor Beginn eines Ladevorgangs die Gruppe Leistungsmodule (3) mit dem Anschlusspunkt (2) verbindet, dass die zentrale Steuereinheit (11) die Schütze (12) zeitversetzt ansteuert, insbesondere so, dass ein Leistungsmodul (3) nach dem anderen zugeschaltet wird.

11. Schnellladestation nach Anspruch 9 oder 10, **dadurch gekennzeichnet, dass** die Schnellladestation (1) eine Sicherungslogik in nicht programmierbarer Hardwarelogik aufweist, die mit den Schützen (12) verbunden ist und bei einem Schließen aller Schütze (12) zwischen zwei Anschlüssen zweier Anschlusspunkte (2) eine Notabschaltung, insbesondere der Halte-PWMs der Schütze (12), auslöst.

12. Schnellladestation nach einem der vorhergehenden Ansprüche, **dadurch gekennzeichnet, dass** die Leistungsmodule (3) unterschiedliche Nennleistungen aufweisen, dass der Unterschied mindestens 5 %, vorzugsweise mindestens 25 %, weiter vorzugsweise mindestens 50 % der geringsten Nennleistung beträgt.

13. Schnellladestation nach einem der vorhergehenden Ansprüche, **dadurch gekennzeichnet, dass** die zentrale Steuereinheit (11) nach einem Ladevorgang die Schaltmatrix (10) so ansteuert, dass Leistungsmodule (3), die keine Leistung liefern, mit dem Anschlusspunkt (2) verbunden sind, während der Anschlusspunkt (2) von keinem Elektrofahrzeug belegt ist.

14. Verfahren zum Betrieb einer Schnellladestation (1) nach einem der vorhergehenden Ansprüche, wobei die Schnellladestation (1) mindestens zwei Anschlusspunkte (2) aufweist, wobei die Schnellladestation (1) mehrere Leistungsmodule (3) aufweist, wobei die Leistungsmodule (3) jeweils eine Stromrichteranordnung (4) insbesondere zur Wandlung einer Wechselspannung als Eingangsspannung der Schnellladestation (1) in eine Gleichspannung als Ausgangsspannung der Schnellladestation (1) aufweisen, wobei die Leistungsmodule (3) Ausgangsanschlüsse (8) aufweisen, an denen das Leistungsmodul (3) elektrische Leistung abgibt, wobei die Ausgangsanschlüsse (8) der Leistungsmodule (3) über eine Schaltmatrix (10) in unterschiedlichen Kombinationen zusammenschaltbar sind, sodass zumindest ein Teil, insbesondere alle, Leistungsmodule (3) flexibel auf die Anschlusspunkte (2) verteilbar sind, wobei die Schnellladestation (1) eine zentrale Steuereinheit (11) aufweist, die die Schaltmatrix (10) und die Verteilung der Leistungsmodule (3) auf die Anschlusspunkte (2) steuert,
**dadurch gekennzeichnet,**
**dass** die zentrale Steuereinheit (11) eine Gruppe von Leistungsmodulen (3) einem Anschlusspunkt (2) zuweist und die Schaltmatrix (10) so ansteuert, dass die Leistungsmodule (3) elektrisch mit dem Anschlusspunkt (2) verbunden sind, dass die zentrale Steuereinheit (11) den Leistungsmodulen (3) der Gruppe Regelparameter zuweist, dass die Leistungsmodule (3) auf Basis der Regelparameter ihre Ausgangsleistung regeln, und, dass die Regelparameter der Leistungsmodule (3) der Gruppe unterschiedlich sind, sodass die Leistungsmodule (3) der Gruppe aufgrund der unterschiedlichen Regelparameter unterschiedliche Ausgangsleistungen an den Anschlusspunkt (2) abgeben.
